# EUROPEAN PATENT SPECIFICATION

(11) **EP 1 164 839 B1**
(45) Date of publication and mention of the grant of the patent: **27.11.2002**
(21) Application number: 00908115.9
(22) Date of filing: 02.03.2000
(51) Int. Cl.: A01K 63/04, C02F 3/04

(54) **PURIFICATION DEVICE FOR PURIFYING FRESH WATER**
REINIGUNGSVORRICHTUNG ZUR REINIGUNG VON SÜSSWASSER
PURIFICATEUR POUR EAU DOUCE

(30) Priority: 03.03.1999 NL 1011436
(43) Date of publication of application: 02.01.2002
(73) Proprietor: Gerritsen, Herman Eric, 7423 DW Deventer (NL); Linke, Helmut Wilhelm, 58708 Menden (DE)
(72) Inventor: Gerritsen, Herman Eric, 7423 DW Deventer (NL); Linke, Helmut Wilhelm, 58708 Menden (DE)
(74) Representative: Dokter, Hendrik Daniel
(86) International application number: NL0000132
(87) International publication number: WO00051422

(56) References cited:
- WO-A-96/07618
- US-A- 3 669 883
- US-A- 5 385 665

## Description

The invention relates to a purification device for removing foam-forming contaminants from fresh water, comprising a vertically placeable tubular housing, which housing, in vertical position, is provided on its top side with a closing cover, is divided by a grating into an upper compartment and a lower compartment, wherein the upper compartment is provided with an inlet channel for water for purifying debouching above the level of the grating and with air inlet means for admitting air into the upper compartment during operation of the device, and wherein the lower compartment is provided with a first outlet channel for foam and a second outlet channel for purified water.

Such a device can be applied for instance to remove proteins from fresh water aquariums and ponds. Feeding of fish kept in fresh water aquariums or small ponds results in contamination of the environment of these fish by proteins in that not all the supplied food is taken up or fully digested. Protein residues result in the creation of bacteria which degrade and convert the proteins into inorganic compounds which enhance algal growth, which results in oxygen-shortage and eventually in fish death.

Such a device is known from the international patent application publ. no. WO 96/07618. This known device comprises a filter plant containing filter material. Water, containing organic and/or inorganic components, is purified in this plant as a result of forming a trickling stream, and then removed through an outlet. The water is fed to a collection surface which builds up above the outlet, the water being supplied in an amout sufficient to bring about both the formation of air bubbles in the trickling stream as the water passes through the plant and to the formation of foam on the collection surface. During this process, the majority of the foreign bodies are bonded and their at least predominant ability to be skimmed off utilized. The resultant foam is drawn off above the collection surface with pressure equalization.

It is a drawback of the known purification device that its efficiency is rather low, which necessarily involves the use of filter material in the device, so that the known purification device must be cleaned regularly.

From the US patent no. 3669883 is further known a device for foam floatation separation of colloids or high molecular weight compounds in dispersions by drawing the dispersion into a pump which then passes it, as motive fluid, through a venturi to draw in air and effect an air emulsion-type mixture. This mixture passes into a separation column wherein the very small air bubbles in the emulsion are allowed to pass out of the liquid. During the passage through the liquid, dispersoid molecules are adsorbed by the small bubbles, which results in the formation of a dispersoid-containing foam that is removed form the top of the separation column. This device however is not suited for the purifying fresh water, as its efficiency is directly proportional to the salinity of the water to be purified.

It is an object of the invention to provide a purification device using which foam-forming contaminants, particularly proteins, can be removed from fresh water without substances herein being released which are immediately hazardous for fish and other fresh water animals or substances which enhance algal growth.

It is a further object to provide a purification device of simple construction which requires no or at least negligible maintenance, and the maintenance and operating costs of which are relatively low.

These objectives are realized, and other advantages gained, with a purification device for removing foam-forming contaminants from fresh water, which device according to the invention is characterized in that the air inlet means are provided for building up an overpressure relative to the ambient pressure of the device, and the grating is placed obliquely when the housing is placed vertically and the first outlet channel extends from just beneath the highest placed part of the grating.

When water is admitted into the first compartment in such a purification device air bubbles are created which are rich in the contaminants present in the water which have adhered to these air bubbles under the influence of occurring phenomena of surface adsorption. It has been found that an obliquely placed grating enhances both foam formation and a good passage of foam from the first to the second compartment. Applying a low overpressure in the device results in a long lifespan of the air bubbles such that the air bubbles can be discharged in the form of contaminated foam from the device via the first outlet channel. Due to the foam-formation for instance proteins, lipids, cellulose, algae, parasites, dyes, softening agents and chemicals originating from medicines are removed from the water. The foam herein acts as a self-cleaning mechanical filter, using which fine contaminating particles are filtered out of the water. The purified water, at least the water with a decreased content of contaminants, can be added via the second outlet channel to the water mass from which it was originally supplied to the purification device. The concept of "tubular housing" in this invention is not limited to a hollow cylinder but comprises in principle any encasing structure closing onto itself in cross-section, such as structures which are rectangular and square or otherwise regular in cross-section.

In an advantageous embodiment the air inlet means comprise a venturi constriction and an opening provided downstream thereof in the inlet channel.

In this embodiment the supplied water for purifying as it were itself entrains the air required to form and sustain foam.

In yet another embodiment the grating is a plate provided with apertures, wherein the diameter of the apertures lies for instance in the range of 6 to 7 mm.

In an embodiment the housing is closed on its underside by a bottom.

In a subsequent embodiment the housing is open on its underside and can be placed vertically with this open underside into the liquid level of a quantity of purified water, wherein the open underside forms the second outlet channel, and wherein the housing is provided for instance with floating means for causing the housing to float in vertical position in the quantity of purified water.

The operation of the device is enhanced even further if the first compartment contains a filter material, for instance a quantity of granular material.

Any waterproof material is in principle suitable as material for the housing, for instance stainless steel or a plastic such as polyvinyl chloride (PVC).

In a particularly practical embodiment the housing is manufactured from a transparent material, for instance an acryl material, so that the operation of the device is directly visible.

The invention will be elucidated hereinbelow on the basis of embodiments and with reference to the annexed drawings.

In the drawings:
Fig. 1 shows in longitudinal section a first embodiment of a purification device according to the invention,
Fig. 2 shows the device of fig. 1 in top view,
Fig. 3 shows a detail of the device of fig. 1 in top view, and
Fig. 4 shows in longitudinal section a second embodiment of a purification device according to the invention.

Corresponding components are designated in the drawing with the same reference numerals.

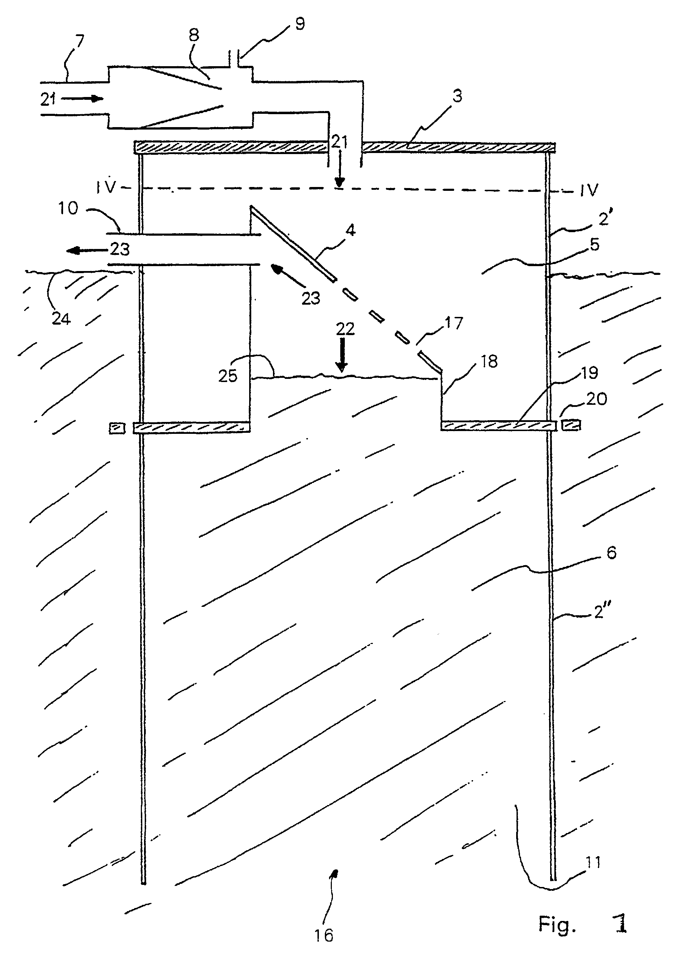

Fig. 1 shows a foam-removing device 16. Tubular housing 2', 2" is provided with a cover 3 and fixing eyes 20 with which the device can be suspended vertically in the liquid surface 24 of a quantity of water for purifying, for instance in a pond or an aquarium. Grating 4 is a plate provided with holes 17 and arranged on a slantwise cut upper end of a vertical inner tube 18 which is connected on its straight cut lower end to an annular plateau 19 received between two parts 2', 2" of the tubular housing of device 16. Grating 4 divides device 1 into an upper compartment 5, which is provided with an inlet channel 7 debouching above grating 4, and a lower compartment 6 which is provided with a foam outlet channel 10 and a water outlet channel 11. Foam outlet channel 10 extends from just below the highest placed part of grating 4. Housing 2', 2" has an open underside which forms the water outlet channel 11. In inlet channel 7 is arranged a venturi constriction 8, at the rear of which debouches an air inlet channel 9 through which air can be drawn in.

The operation of device 16 is as follows. Using a water pump (not shown) water contaminated with foam-forming substances (particularly proteins) is admitted via inlet channel 7 (as according to arrow 21) and falls onto grating 4, wherein foam is formed. The formation of foam may further be enhanced by a coarse-grained material (not shown). The formed foam, which is rich in contaminants, and the purified water, which has a relatively low level of contaminants, sink through the grating to the second compartment 6, from where the foam is discharged via foam outlet channel 10 (as according to arrows 23) and the water via water outlet channel 11 (as according to arrow 22). A slight overpressure in housing 2', which is a result of air being drawn in via inlet channel 9, herein prevents the air bubbles in the foam bursting prematurely. The bottom of second compartment 6 is formed by the water level 25 inside housing 2', 2". The overpressure in the device, which is a consequence of air being drawn in via inlet channel 9, can result in a difference in the water level 24 outside housing 2', 2" and the water level 25 inside housing 2', 2".

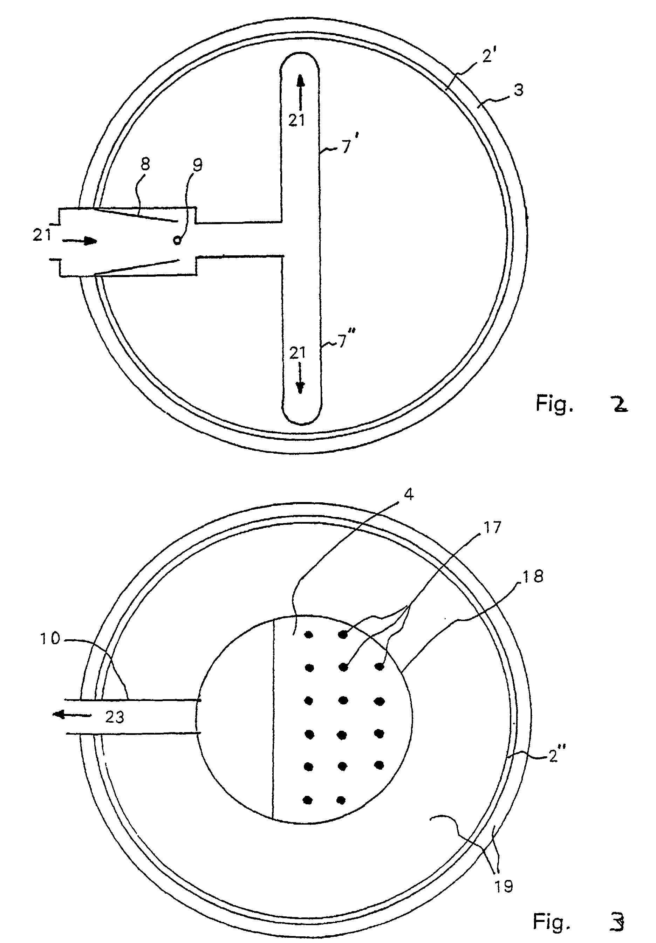

Fig. 2 shows device 16 of fig. 1 in top view. Water inlet channel 7 is branched in a manner such that branches 7', 7" extend to a position above annular plateau 19 in order to enhance forming of the greatest possible quantity of foam.

Fig. 3 shows device 16 in a top view from the level of broken line IV-IV in fig. 1. The grating 4 is a plate, in the right-hand part of which are arranged apertures 17 with a diameter of about 6-7 mm, through which foam is driven from first compartment 5 to second compartment 6, where it accumulates below the highest placed (closed) left-hand part of grating 4 and can be discharged via the foam outlet channel 10 debouching just below that part.

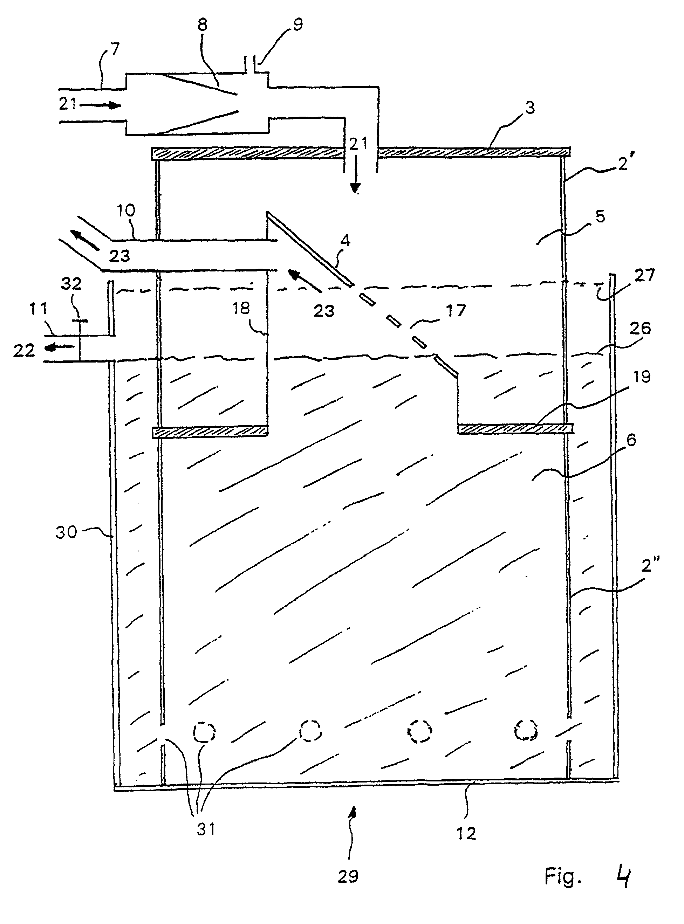

Fig. 4 shows a second embodiment 29 practically identical to the foam-removing device 16 shown in fig. 1 but differing therefrom in that apertures 32 are formed in the underside of tube 2' and tube 2' is closed on the underside by a bottom 12 which extends beyond tube 2' and from which an outer tube 30 extends concentrically to tubes 2', 2". Water entering the lower compartment 6 through grating 4 is discharged via apertures 31 to the space between tubes 2', 2" and 30, from where it is pushed upward to a minimum level 26 defined by a water outlet channel 11 formed in tube 30 and provided with a control valve 32 or (when said control valve 32 is partially closed) to a maximum level 27 just below the upper edge of outer tube 30. Other than the protein foam-removing device 16 of fig. 1, device 29 of fig. 4 can also be placed above and outside the liquid level of a quantity of water for purifying. The presence of a closed bottom 12 moreover enhances rising of formed air bubbles.

It is noted that the described embodiments serve for a better understanding of the invention and not to limit the scope thereof.

Within the framework of the inventive concept, which is defined by the scope of the appended claims, numerous embodiments lie within the reach of the skilled person.

Although the given embodiments are particularly suited for application in cleaning fresh water in aquariums and ponds, a device according to the invention is also suitable for cleaning water in for instance swimming pools, drinking-water reservoirs or wastewater purification plants. Such a device is advantageously applied in combination with an UV light source or an ozone generator to prevent the growth of harmful bacteria.

## Claims

1. Purification device (16, 29) for removing foam-forming contaminants from fresh water, comprising a vertically placeable tubular housing (2', 2") which housing (2', 2"), in vertical position,
- is provided on its top side with a closing cover (3),
- is divided by a grating (4) into an upper compartment (5) and a lower compartment (6), wherein
- the upper compartment (5) is provided with an inlet channel (7) for water for purifying debouching above the level of the grating (4) and with air inlet means (8, 9) for admitting air into the upper compartment (5) during operation of the device (16, 29), and wherein
- the lower compartment (6) is provided with a first outlet channel (10) for foam and a second outlet channel (11) for purified water, **characterized in that** the air inlet means (8, 9) are provided for building up an overpressure relative to the ambient pressure of the device (16, 29), and the grating (4) is placed obliquely when the housing (2', 2") is placed vertically and the first outlet channel (10) extends from just beneath the highest placed part of the grating (4).

2. Purification device (16, 29) as claimed in claim 1, **characterized in that** the air inlet means comprise a venturi constriction (8) and an opening (9) provided downstream thereof in the inlet channel (7).

3. Purification device (16, 29) as claimed in claim 1 or 2, **characterized in that** the grating (4) is a plate provided with apertures (17).

4. Purification device (16, 29) as claimed in claim 3, **characterized in that** the diameter of the apertures (17) lies in the range of 6 to 7 mm.

5. Purification device (16) as claimed in any of the claims 1-4, **characterized in that** the housing (2', 2") is open on its underside and can be placed vertically with this open underside in the liquid surface (25) of a quantity of purified water, wherein the open underside forms the second outlet channel (11).

6. Purification device (16) as claimed in claim 5, **characterized in that** the housing (2', 2") is provided with fixing means (20) for holding the housing (2', 2") in a vertical position in the quantity of purified water.

7. Purification device (29) as claimed in any of the claims 1-4, **characterized in that** the housing (2', 2") is closed on its underside by a bottom (12) which extends beyond this housing (2', 2") and from which extends an outer casing (30) enclosing the housing (2', 2"), wherein in each of the underside of the housing (2') and the top side of outer casing (30) is formed at least one passage opening (31, 11) for purified water.

8. Purification device (16, 29) as claimed in any of the foregoing claims, **characterized in that** the first compartment (5) contains a granular material.

9. Purification device (16, 29) as claimed in any of the foregoing claims, **characterized in that** the housing (2', 2") is manufactured from a transparent material.

10. Purification device (16, 29) as claimed in any of the foregoing claims, **characterized in that** the housing (2', 2") is manufactured from an acryl material.

11. Use of a purification device (16, 29) as claimed in any of the foregoing claims for cleaning fresh water in combination with a UV light source.

12. Use of a purification device (16, 29) as claimed in any of the foregoing claims for cleaning fresh water in combination with an ozone generator.

## Patentansprüche

1. Reinigungsvorrichtung (16, 29) für das Entfernen von schaumbildenden Verunreinigungen aus Süßwasser, die ein senkrecht zu stellendes röhrenförmiges Gehäuse (2', 2") umfasst, und dieses Gehäuse (2', 2") in senkrechter Stellung
- an seiner Oberseite mit einem Abschlussdeckel versehen (3) ist,
- durch ein Gitter (4) in eine obere Kammer (5) und eine untere Kammer (6) getrennt ist, wobei
- die obere Kammer (5) mit einem über dem Niveau des Gitters (4) ausmündenden Einlasskanal (7) für zu reinigendes Wasser und mit Lufteinlassmitteln (8, 9) zum während des Betriebs der Vorrichtung (16, 29) Einlassen von Luft in die obere Kammer (5) versehen ist, und wobei
- die untere Kammer (6) mit einem ersten Auslasskanal (10) für Schaum und einem zweiten Auslasskanal (11) für gereinigtes Wasser versehen ist, **dadurch gekennzeichnet, dass** die Lufteinlassmittel (8, 9) verschafft sind um einen Überdruck in Bezug auf den Umgebungsdruck der Vorrichtung (16, 29) aufzubauen, und das Gitter (4) bei senkrechter Stellung des Gehäuses (2', 2") schräg gestellt ist, und sich der erste Auslasskanal (10) genau unter dem am höchsten gestellten Teil des Gitters (4) erstreckt.

2. Reinigungsvorrichtung (16, 29) nach Anspruch 1, **dadurch gekennzeichnet, dass** die Lufteinlassmittel eine Venturiverengung (8) und eine stromabwärts davon verschaffte Öffnung (9) in dem Einlasskanal (7) umfassen.

3. Reinigungsvorrichtung (16, 29) nach Anspruch 1 oder 2, **dadurch gekennzeichnet, dass** das Gitter (4) eine mit Öffnungen (17) versehene Platte ist.

4. Reinigungsvorrichtung (16, 29) nach Anspruch 3, **dadurch gekennzeichnet, dass** der Durchschnitt der Öffnungen (17) im Bereich von 6 bis 7 mm liegt.

5. Reinigungsvorrichtung (16) nach einem der Ansprüche 1-4, **dadurch gekennzeichnet, dass** das Gehäuse (2', 2") an seiner Unterseite offen ist und mit dieser offenen Unterseite senkrecht in die Flüssigkeitsoberfläche (25) einer gereinigten Wassermenge gestellt werden kann, wobei die offene Unterseite den zweiten Auslasskanal (11) bildet.

6. Reinigungsvorrichtung (16) nach Anspruch 5, **dadurch gekennzeichnet, dass** das Gehäuse (2', 2") mit Befestigungsmitteln (20) versehen ist, um das Gehäuse (2', 2") in der gereinigten Wassermenge in einer senkrechten Stellung zu halten.

7. Reinigungsvorrichtung (29) nach einem der Ansprüche 1-4, **dadurch gekennzeichnet, dass** das Gehäuse (2', 2") an seiner Unterseite mit einem sich über dieses Gehäuse (2', 2") hinaus erstreckenden Boden (12) geschlossen ist, und von dem sich ein das Gehäuse (2', 2") umschließender Außenmantel (30) erstreckt, wobei sich an jeweils der Unterseite des Gehäuses (2') und der Oberseite des Außenmantels (20) zumindest eine Durchlassöffnung (31, 11) für gereinigtes Wasser befindet.

8. Reinigungsvorrichtung (16, 29) nach einem der obigen Ansprüche, **dadurch gekennzeichnet, dass** die erste Kammer (5) ein körniges Material enthält.

9. Reinigungsvorrichtung (16, 29) nach einem der obigen Ansprüche, **dadurch gekennzeichnet, dass** das Gehäuse (2', 2") aus einem transparenten Material hergestellt ist.

10. Reinigungsvorrichtung (16, 29) nach einem der obigen Ansprüche, **dadurch gekennzeichnet, dass** das Gehäuse (2', 2") aus einem Acrylmaterial hergestellt ist.

11. Gebrauch einer Reinigungsvorrichtung (16, 29) nach einem der obigen Ansprüche für die Reinigung von Süßwasser in Kombination mit einer UV-Lichtquelle.

12. Gebrauch einer Reinigungsvorrichtung (16, 29) nach einem der obigen Ansprüche für die Reinigung von Süßwasser in Kombination mit einem Ozongenerator.

## Revendications

1. Dispositif de purification (16, 29) pour éliminer des contaminants formant de la mousse de l'eau douce, comprenant une enceinte tubulaire pouvant être placée verticalement (2', 2"), enceinte (2', 2") qui, en position verticale,
- est pourvue sur son côté supérieur d'un couvercle de fermeture (3),
- est divisée par une grille (4) en un compartiment supérieur (5) et un compartiment inférieur (6), dans lequel
- le compartiment supérieur (5) est pourvu d'un canal d'entrée (7) pour l'eau à purifier débouchant au-dessus du niveau de la grille (4) et de moyens d'entrée d'air (8, 9) assurant une arrivée d'air dans le compartiment supérieur (5) durant le fonctionnement du dispositif (16, 29), et dans lequel
- le compartiment inférieur (6) est pourvu d'un premier canal de sortie (10) pour la mousse et d'un deuxième canal de sortie (11) pour l'eau purifiée, **caractérisé en ce que** les moyens d'entrée d'air (8, 9) sont prévus de manière à créer une surpression par rapport à la pression ambiante du dispositif (16, 29), et la grille (4) est placée en oblique lorsque l'enceinte (2', 2") est placé verticalement et le premier canal de sortie (10) s'étend à partir de juste en dessous de la partie la plus haut placée de la grille (4).

2. Dispositif de purification (16, 29) selon la revendication 1, **caractérisé en ce que** les moyens d'entrée d'air comprennent un étranglement de venturi (8) et une ouverture (9) prévue en aval de celui-ci dans le canal d'entrée (7).

3. Dispositif de purification (16, 29) selon la revendication 1 ou 2, **caractérisé en ce que** la grille (4) est une plaque comportant des ouvertures (17).

4. Dispositif de purification (16, 29) selon la revendication 3, **caractérisé en ce que** le diamètre des ouvertures (17) est compris entre 6 et 7 mm.

5. Dispositif de purification (16) selon l'une quelconque des revendications 1 à 4, **caractérisé en ce que** l'enceinte (2', 2") est ouverte sur son côté inférieur et peut être placée verticalement avec son côté inférieur ouvert dans la surface liquide (25) d'un volume d'eau purifiée, dans lequel le côté inférieur ouvert forme le deuxième canal de sortie (11).

6. Dispositif de purification (16) selon la revendication 5, **caractérisé en ce que** l'enceinte (2', 2") est pourvue de moyens de fixation (20) pour maintenir l'enceinte (2', 2") en position verticale dans le volume d'eau purifiée.

7. Dispositif de purification (29) selon l'une quelconque des revendications 1 à 4, **caractérisé en ce que** l'enceinte (2', 2") est fermée sur son côté inférieur par un fond (12) qui s'étend au-delà de cette enceinte (2', 2") et à partir duquel s'étend un boîtier extérieur (30) renfermant l'enceinte (2', 2"), dans lequel il est formé au moins une ouverture de passage (31, 11) pour l'eau purifiée tant dans le côté inférieur de l'enceinte (2') que dans le côté supérieur du boîtier extérieur (30).

8. Dispositif de purification (16, 29) selon l'une quelconque des revendications précédentes, **caractérisé en ce que** le premier compartiment (5) contient une matière granulaire.

9. Dispositif de purification (16, 29) selon l'une quelconque des revendications précédentes, **caractérisé en ce que** l'enceinte (2', 2") est fabriquée à partir d'une matière transparente.

10. Dispositif de purification (16, 29) selon l'une quelconque des revendications précédentes, **caractérisé en ce que** l'enceinte (2', 2") est fabriquée à partir d'une matière acrylique.

11. Utilisation d'un dispositif de purification (16, 29) selon l'une quelconque des revendications précédentes pour nettoyer de l'eau douce en combinaison avec une source de lumière UV.

12. Utilisation d'un dispositif de purification (16, 29) selon l'une quelconque des revendications précédentes pour nettoyer de l'eau douce en combinaison avec un générateur d'ozone.
